# EUROPEAN PATENT APPLICATION

(11) **EP 2 634 889 A1**
(43) Date of publication of application: **04.09.2013**
(21) Application number: 11835569.2
(22) Date of filing: 30.08.2011
(51) Int. Cl.: H02J 7/00, B60L 11/18

(54) **BATTERY CHARGE/SWAP MONITORING SYSTEM AND METHOD BASED ON INTERNET OF THINGS**

(30) Priority: 27.10.2010 CN 201010521489
(71) Applicant: State Grid Corporation of China, Beijing 100031 (CN); XJ Group Co., Ltd., Henan 461000 (CN)
(72) Inventor: WANG, Xiangqin, Beijing 100031 (CN); HU, Jiangyi, Beijing 100031 (CN); JIA, Junguo, Beijing 100031 (CN); LEI, Xianzhang, Xuchang Henan 461000 (CN); XUE, Fei, Xuchang Henan 461000 (CN); LIAN, Zhanwei, Xuchang Henan 461000 (CN); WU, Bin, Beijing 100031 (CN); ZHANG, Pengfei, Beijing 100031 (CN)
(74) Representative: Tischner, Oliver
(86) International application number: PCT/CN2011/079092
(87) International publication number: WO 2012/055295

(57) **Abstract**

This disclosure discloses a battery charge/swap monitoring system and method based on the internet of things. The system comprises a terminal information collecting device, a battery charge/swap station monitoring device, and a regional monitoring device. The terminal information collecting device carries out identity identification, state information collection and dynamic orientation on a terminal device by using an information sensing mode, transmits the identity identification information to the battery charge/swap station monitoring device through a wired network, and transmits the state information and orientation information to the regional monitoring device through a wireless network. The battery charge/swap station monitoring device receives the identity identification information of the terminal device, monitors an operating state of a battery charge/swap station, carries out metering and billing on a battery charge/swap process, and transmits the state information, the metering and billing information and the identity identification information of the terminal device to the regional monitoring device. The regional monitoring device monitors the terminal devices and the battery charge/swap stations in its jurisdiction area, and takes statistics on the metering and billing information. Thus, effective monitoring and management of a terminal device and a battery charge/swap station can be realized.

## Description

### Field of the Invention

This disclosure relates generally to the technical field of electric vehicle, and specifically to a battery charge/swap monitoring system and method based on the internet of things.

### Description of the Related Art

At present, a number of charging stations and charging facilities have been established in China and other countries in the world. In China, however, most of the existing electric vehicle charging facilities are not launched into commercial operations, but serve specific objects. Specifically, the charging stations for electric bus lines, the Olympic electric bus charging stations, and the like, belong to auxiliary projects of the enterprises for electric vehicle demonstrative running, and the charging services are not open to the society. These charging stations operate independently and their serving fashions are difficult to meet the demands of the majority of electric vehicle users for convenient, rapid, and free power services.

In addition, the electric vehicle charging facilities function as part of the power grid and their use and operations are closely associated with the secure operation of the power grid. However, due to independent operations and services of the charging stations, a management system of the power grid cannot perform the effective monitoring and management over the charging stations.

### Summary of the Invention

A technical problem to be solved by this disclosure is to provide a battery charge/swap monitoring system and method based on the internet of things, which can cause terminal devices in an electric vehicle battery charge/swap system to be interconnected by use of the internet of things, and can effectively monitor the terminal devices and charge/swap stations.

In accordance with an aspect of this disclosure, there is provided a battery charge/swap monitoring system based on the internet of things, comprising a terminal information collecting device, a battery charge/swap station monitoring device and a regional monitoring device, wherein the terminal information collecting device is configured for carrying out identity identification, state information collection and dynamic orientation on a terminal device by using an information sensing mode, transmitting the acquired identity identification information of the terminal device to the battery charge/swap station monitoring device through a wired network, and transmitting the acquired state information and orientation information of the terminal device to the regional monitoring device through a wireless network; the battery charge/swap station monitoring device is configured for receiving the identity identification information of the terminal device from the terminal information collecting device, monitoring an operating state of a battery charge/swap station, carrying out metering and billing on a battery charge/swap process, and transmitting the monitored state information of the battery charge/swap station, the acquired metering and billing information and the received identity identification information of the terminal device to the regional monitoring device; the regional monitoring device is configured for monitoring the terminal devices and the battery charge/swap stations in its jurisdiction area based on information from the terminal information collecting device and information from the battery charge/swap station monitoring device, and taking statistics on the metering and billing information.

In an embodiment according to the aspect of this disclosure, the terminal device includes a battery, a vehicle terminal, and an electric vehicle.

In another embodiment according to the aspect of this disclosure, the terminal information collecting device includes: information sensing means for carrying out identity identification, state information collection and dynamic orientation on the terminal device; wireless transmission means, connected to the information sensing means, for transmitting the acquired state information and orientation information of the terminal device to the regional monitoring device via a wireless network.

In yet another embodiment according to the aspect of this disclosure, the information sensing means includes: an RFID card reader for reading an RFID tag attached to the terminal device to carry out identity identification of the terminal device, and for transmitting the identity identification information of the terminal device to the battery charge/swap station monitoring device via a fiber-optic network; a battery management system for collecting the state information of the battery from the battery, and transmitting the state information of the battery to the wireless transmission means; GPS orientation means for carrying out dynamic orientation of the terminal device, and transmitting the orientation information of the terminal device to the wireless transmission means.

In a further embodiment according to the aspect of this disclosure, the battery charge/swap station monitoring device includes a temperature detector, a humidity detector, a video collector, an analog-amount collector, and an electricity-consumption-amount collector, wherein the temperature detector, the humidity detector, and the video collector are provided within the battery charge/swap station, and the analog-amount collector and the electricity-consumption-amount collector are connected to a charging pile within the battery charge/swap station.

In a further embodiment according to the aspect of this disclosure, the regional monitoring device includes information receiving means for receiving the state information and the orientation information of the terminal device from the terminal information collecting device, and the state information, the metering and billing information of the battery charge/swap station, and the identity identification information of the terminal device from the battery charge/swap station monitoring device; terminal control means, connected to the information receiving means, for analyzing the state information, the orientation information, and the identity identification information of the terminal device, and issuing a control command to the terminal device according to an analysis result, thereby realizing control over the terminal device; battery charge/swap station control means, connected to the information receiving means, for analyzing the state information of the battery charge/swap station, and issuing a control command to the battery charge/swap station monitoring device according to an analysis result, thereby realizing control over the battery charge/swap station.

In a further embodiment according to the aspect of this disclosure, the terminal device includes an electric vehicle and a battery provided with a wireless receiving module, the state information of the terminal device including state information of the battery and a traveling state of the vehicle; terminal control means includes a power supply control unit, connected to information receiving means, for controlling power supply of the battery to the electric vehicle based on the state information of the battery, the traveling state of the vehicle and orientation information; a peak-staggered charge control unit, connected to the information receiving means, for notifying battery charge/swap users based on load data of a current distribution network so as to direct the users to perform battery charge/swap during a non-peak time period according to load variation.

In a further embodiment according to the aspect of this disclosure, the state information of the battery charge/swap station includes a voltage value and a current value, and the battery charge/swap station control means includes an alarm triggering unit, connected to information receiving means, for triggering an abnormal operation alarm of a battery charge/swap station when the received state information of the battery charge/swap station is abnormal.

In a further embodiment according to the aspect of this disclosure, the regional monitoring device further includes vehicle traffic predicting means, connected to the information receiving means, for predicting vehicle traffic based on road conditions and the orientation information of the terminal device.

In accordance with another aspect of this disclosure, there is also provided a battery charge/swap monitoring method based on the internet of things, the method comprising the steps of: using a terminal information collecting device to carry out identity identification, state information collection and dynamic orientation on a terminal device, to transmit the acquired identity identification information of the terminal device to a battery charge/swap station monitoring device through a wired network, and to transmit the acquired state information and orientation information of the terminal device to a regional monitoring device through a wireless network; using the charge/swap station monitoring device to monitor an operating state of a battery charge/swap station, to carry out metering and billing on a battery charge/swap process, and to transmit the monitored state information of the battery charge/swap station, the acquired metering and billing information and the received identity identification information of the terminal device to the regional monitoring device; the regional monitoring device monitoring the terminal devices and the battery charge/swap stations in its jurisdiction area based on information from the terminal information collecting device and information from the battery charge/swap station monitoring device, and taking statistics on the metering and billing information.

In an embodiment according to the aspect of this disclosure, the terminal device includes a battery, a vehicle terminal, and an electric vehicle.

In another embodiment according to the aspect of this disclosure, the terminal information collecting device includes: information sensing means for carrying out identity identification, state information collection and dynamic orientation on the terminal device; wireless transmission means, connected to the information sensing means, for transmitting the acquired state information and orientation information of the terminal device to the regional monitoring device via a wireless network; wherein the information sensing means includes an RFID card reader, GPS orientation means, and a battery management system.

In yet another embodiment according to the aspect of this disclosure, the step of using a terminal information collecting device to carry out identity identification, state information collection and dynamic orientation on a terminal device includes the steps of: using the RFID card reader to read an RFID tag attached to the terminal device to carry out identity identification of the terminal device, and to transmit the identity identification information of the terminal device to the battery charge/swap station monitoring device via a fiber-optic network; using the battery management system to collect the state information of the battery from the battery, and to transmit the state information of the battery to the regional monitoring device; and using the GPS orientation means to carry out dynamic orientation of the terminal device, and to transmit the orientation information of the terminal device to the regional monitoring device.

In a further embodiment according to the aspect of this disclosure, the step of the regional monitoring device monitoring the terminal devices and the battery charge/swap stations in its jurisdiction area based on information from the terminal information collecting device and information from the battery charge/swap station monitoring device includes the steps of: analyzing the state information, the orientation information, and the identity identification information of the terminal device, and issuing a control command to the terminal device according to an analysis result, thereby realizing control over the terminal device; analyzing the state information of the battery charge/swap station, and issuing a control command to the battery charge/swap station monitoring device according to an analysis result, thereby realizing control over the battery charge/swap station.

In a further embodiment according to the aspect of this disclosure, the terminal device includes an electric vehicle and a battery provided with a wireless receiving module, the state information of the terminal device including state information of the battery and a traveling state of the vehicle; the step of issuing a control command to the terminal device according to an analysis result, thereby realizing control over the terminal device includes the steps of: controlling power supply of the battery to the electric vehicle based on the state information of the battery, the traveling state of the vehicle and orientation information; and notifying battery charge/swap users based on load data of a current distribution network so as to direct the users to perform battery charge/swap during a non-peak time period according to load variation.

In a further embodiment according to the aspect of this disclosure, the state information of the battery charge/swap station includes a voltage value and a current value, and the step of issuing a control command to the battery charge/swap station monitoring device according to an analysis result, thereby realizing control over the battery charge/swap station includes the step of triggering an abnormal operation alarm of the battery charge/swap station when the received state information of the battery charge/swap station is abnormal.

In a further embodiment according to the aspect of this disclosure, the step of the regional monitoring device monitoring the terminal devices and the battery charge/swap stations in its jurisdiction area based on information from the terminal information collecting device and information from the battery charge/swap station monitoring device further includes the steps of: carrying out orientation and tracking of the terminal device based on the orientation information of the terminal device; and predicting vehicle traffic based on road conditions and the orientation information of the terminal device.

The battery charge/swap monitoring system and method based on the internet of things provided by this disclosure are capable of causing the terminal devices to be interconnected and to communicate with each other using the internet of things, thereby satisfying the demands of users for convenient, rapid, and free power services. Meanwhile, this disclosure is further capable of performing concentrated monitoring and management on the terminal devices and the battery charge/swap stations based on the collected identity identification information, state information and orientation information of the terminal devices and the monitored state information of the battery charge/swap stations, thereby realizing smart battery charge/swap for electric vehicles. It can be seen that, this disclosure provides an effective technical support for electric vehicle charging facilities for establishment of a smart power grid, and by electric vehicle battery charge/swap management, the applications of the smart power grid in the electricity consumption field are enriched, thereby promoting the building of the smart power grid in China.

### Brief Description of the Drawings

The accompanying drawings set forth here are used to provide further understanding of this disclosure, and constitute a part of the present application. In these drawings:
FIG. 1 is a structural view of an embodiment of a battery charge/swap monitoring system of this disclosure;
FIG. 2 is a structural view of another embodiment of the battery charge/swap monitoring system of this disclosure;
FIG. 3 is a structural view of a yet another embodiment of the battery charge/swap monitoring system of this disclosure;
FIG. 4 is a structural view of a further embodiment of the battery charge/swap monitoring system of this disclosure;
FIG. 5 is a structural view of a further embodiment of the battery charge/swap monitoring system of this disclosure;
FIG. 6 is a structural view of a further embodiment of the battery charge/swap monitoring system of this disclosure;
FIG. 7 is a structural view of a further embodiment of the battery charge/swap monitoring system of this disclosure;
FIG. 8 is a function description view of the battery charge/swap monitoring system of this disclosure;
FIG. 9 is a flow chart of an embodiment of a battery charge/swap monitoring method based on the internet of things of this disclosure; and
FIG. 10 is a view showing technical implementation principles of the battery charge/swap monitoring method based on the internet of things of this disclosure.

### Description of the Preferred Embodiments

A more comprehensive description of this disclosure is given below with reference to the drawings, wherein exemplary embodiments of this disclosure are illustrated. The exemplary embodiments of this disclosure and illustrations thereof help to interpret the present invention, but do not constitute improper limitations on the present invention.

In prospect of the large-scaled application of electric vehicle, battery charge/swap facilities must change from for demonstrative running to for commercial operations. Thus, it is desirable to monitor and manage terminal devices and battery charge/swap stations, and establish a unified and standard battery battery/swap monitoring system, thereby supporting demand of the large-scaled electric vehicle for battery charge/swap services.

A battery chargFe/swap monitoring system based on the internet of things in this disclosure is an important composite part of new-generation smart power grid information technology application and establishment, and the battery charge/swap monitoring system based on the internet of things is established for the purpose of connecting related objects, such as an electric vehicle, a vehicle terminal and a battery, to the Internet according to specified protocols by means of information sensing devices such as Radio Frequency IDentification (RFID), an infrared sensor, a Global Positioning System, a laser scanner, and a battery management system, etc., to carry out information exchange and communication, and establish smart identification, orientation, tracking, monitoring and management of the related objects, so that it is possible to realize smart management and application of electric vehicle battery charge/swap related services, and provide support for electric vehicle scale popularization and charging facilities commercial operations. Meanwhile, by launching smart applications of electric vehicle, power consumption and exhaust emission can be reduced and the building of the smart gird is promoted, thereby realizing optimization of integral resources, reducing the power grid operating costs, and improving the economical benefits, etc.

A bi-directional communication network is an important guarantee for fulfilling the purpose of this disclosure. In accordance with service distribution, service flow and communication demands in terms of electric vehicle battery charge/swap, a plurality of communication technologies and a plurality of communication networks are employed synthetically to realize identity identification, device state monitoring, orientation and tracking, charge smart guide, emergency aid, billing and payment, operation management and asset allocation, etc. Specifically, it is possible to realize communication and interconnection between terminal devices, and between terminal devices and battery charge/swap stations in a battery charge/swap monitoring system by use of communication technologies such as CAN (Control Area Network) bus, WIFI, Ethernet, etc., in conjunction with public networks such as GPRS/CDMA/3G communication networks, and electric power dedicated networks such as distribution communication networks and electric power transmission networks, etc.

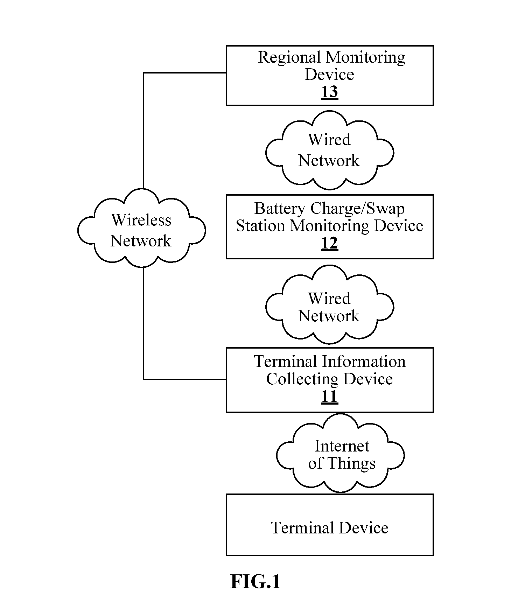

FIG. 1 is a structural view of an embodiment of a battery charge/swap monitoring system of this disclosure.

As shown in FIG. 1, the battery charge/swap monitoring system in this embodiment may comprise a terminal information collecting device 11, a battery charge/swap monitoring device 12, and a regional monitoring device 13.

The terminal information collecting device 11, connected to a terminal device via the internet of things, is configured for carrying out identity identification, state information collection and dynamic orientation on the terminal device by using an information sensing mode, transmitting the acquired identity identification information of the terminal device to the battery charge/swap station monitoring device through a wired network, and transmitting the acquired state information and orientation information of the terminal device to the regional monitoring device through a wireless network.

For example, the terminal device may include a battery, a vehicle terminal and an electric vehicle, and the terminal information collecting device is capable of performing sensing and identification using an information sensing device according to a uniform coding standard, and of collecting identity information and current operating states of the vehicle and the battery, such as information about quantity of electricity, current, voltage, temperature, geographic position, etc., and of performing data exchange with the battery charge/swap station monitoring device and the regional monitoring device via the wired network and the wireless network, respectively.

The charge/swap station monitoring device 12, connected to the terminal information collecting device via the wired network, is configured for receiving the identity identification information of the terminal device from the terminal information collecting device, monitoring an operating state of a battery charge/swap station, carrying out metering and billing on a battery charge/swap process, and transmitting the monitored state information of the battery charge/swap station, the acquired metering and billing information and the received identity identification information of the terminal device to the regional monitoring device, wherein the state information of the battery charge/swap station may include physical quantities such as a voltage value and a current value of a charging pile.

Specifically, the charge/swap station monitoring device mainly performs monitoring and management on objects such as charging piles, battery charge/swap stations, distribution stations, etc., which may include monitoring of battery charge/swap stations, battery operation management, metering and billing and service settlement, data services directed to superior systems, etc., thereby realizing rapid, reliable and smart management on electric vehicle battery charge/swap stations.

In addition, the charge/swap station monitoring device can further monitor an operating process of a swapping device. For example, it is possible to identify identities of batteries in real time by means of information collecting means on the swapping device in a swapping process, thereby further performing grouping management of the batteries. Due to differences in lifetime and operating environment, the batteries have considerably different performances. The arbitrarily mixed use of the batteries with different performances may seriously shorten the lifetime of the batteries or damage the batteries. For grouping management, battery boxes of a same group are required to always work together and cannot be separately mixed. Accordingly, it looks especially important to dynamically identify the identities of the batteries for dynamically monitoring the group.

The regional monitoring device 13, connected to the battery charge/swap station monitoring device via a fiber-optic network, and connected to the terminal information collecting device via the wireless network, is configured for monitoring the terminal devices and the battery charge/swap stations in its jurisdiction area based on information from the terminal information collecting device and information from the battery charge/swap station monitoring device, and taking statistics on the metering and billing information.

This embodiment can interconnect related main bodies with identity identifiers, such as an electric vehicle, a battery, a vehicle terminal, a battery charge/swap station, and a smart power grid, etc. using GPRS/3G, WIFI, Internet, etc., thereby realizing monitoring on the battery charge/swap stations and the terminal devices.

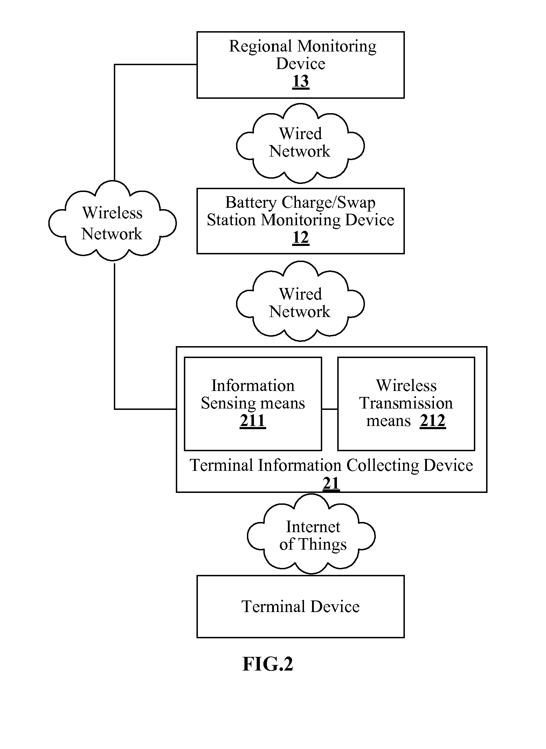

FIG. 2 is a structural view of another embodiment of the battery charge/swap monitoring system of this disclosure.

As shown in FIG. 2, compared with the embodiment in FIG. 1, the terminal information collecting device 21 of this embodiment may comprise:
information sensing means 211 for carrying out identity identification, state information collection and dynamic orientation on the terminal device; for example, it is possible to realize identity identification and state information collection on the terminal device using an RFID card reader, a sensor, a battery management system, etc., and to realize dynamic orientation of the terminal device by means of an auxiliary GPS mode;
wireless transmission means 212, connected to the information sensing means 211, for transmitting the acquired state information and orientation information of the terminal device to the regional monitoring device via a wireless network.

In this embodiment, state information and identity identification information of each terminal device can be collected by means of the information sensing means, and the collected information can be transmitted to the regional monitoring device by means of the wireless transmission means, so that the regional monitoring device can realize asset management, logistics distribution and charge state control, and the like, based on the received information.

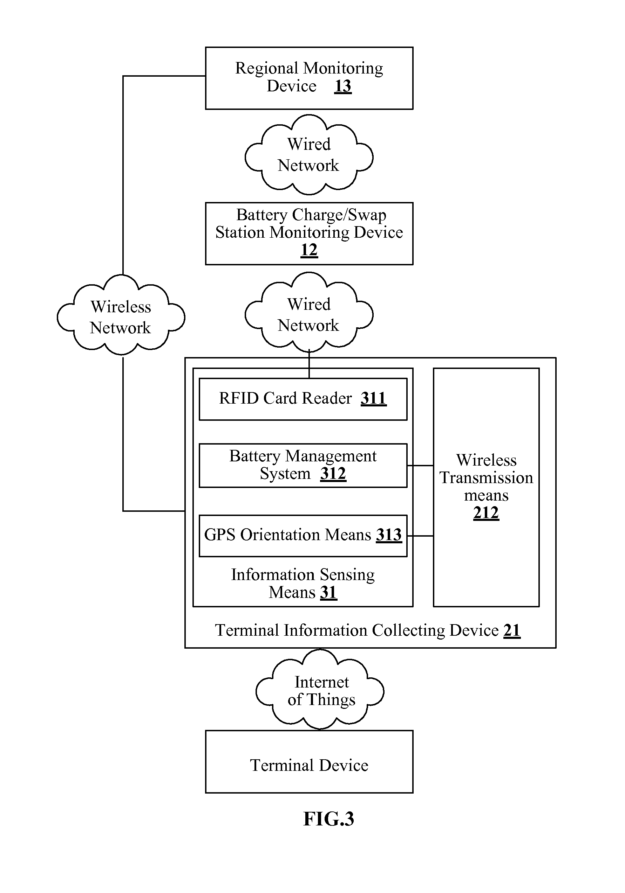

FIG. 3 is a structural view of a yet another embodiment of the battery charge/swap monitoring system of this disclosure.

As shown in FIG. 3, compared with the embodiment in FIG. 2, the information sensing means 31 of this embodiment may comprise:
an RFID card reader 311 for reading an RFID tag attached to the terminal device to carry out identity identification of the terminal device, and for transmitting the identity identification information of the terminal device to the battery charge/swap station monitoring device via a fiber-optic network;
for example, first, it is necessary to impart an RFID tag to a terminal device, and when the terminal device to which the RFID tag is attached enters a radio frequency identification range, identification means such as an RFID card reader sends an identification request signal to the terminal device, and upon receiving the identification request signal, the RFID tag on the terminal device returns information recited in the tag to the RFID card reader; in practical applications, the RFID card reader can be mounted on a hand of a swapping robot, and in a swap operating process, identity information of a battery under operation can be directly identified;
a battery management system 312 for collecting state information of the battery from the battery, and transmitting the state information of the battery to the wireless transmission means;

GPS orientation means 313 for carrying out dynamic orientation on the terminal device, and transmitting orientation information of the terminal device to the wireless transmission means.

In this embodiment, the identity information, the orientation information and the state information of the terminal device are acquired using the technology of the internet of things, so that the regional monitoring device can realize orientation, tracking, monitoring and management on the terminal device. Optionally, the information sensing means can be provided on the terminal devices and the battery charge/swap stations, and for example, the RFID card reader can be provided on the battery charge/swap stations, the battery management system can be provided on the battery, and the GPS orientation means can be provided on the battery, the vehicle terminal or the electric vehicle.

In a further embodiment of the battery charge/swap monitoring system of this disclosure, the battery charge/swap station monitoring device may comprise a temperature detector, a humidity detector, a video collector, an analog-amount collector, and an electricity-consumption-amount collector, wherein the temperature detector, the humidity detector, and the video collector are provided within the battery charge/swap station, and the analog-amount collector and the electricity-consumption-amount collector are connected to a charging pile within the battery charge/swap station.

In a further embodiment of the battery charge/swap monitoring system of this disclosure, the battery charge/swap station monitoring device is responsible for collecting information data such as quantity of electricity, current, voltage, temperature, etc. of the main bodies such as power batteries, electric vehicle, vehicle terminal, etc., and for performing related processing and analysis processing on the collected data, which mainly comprises: checking consistency of the collected data with data in the system and integrity of the collected data, wherein for example, when an electric vehicle is being charged, it is required to acquire voltage and current of the battery used by the electric vehicle, and to determine whether the acquired voltage and current match parameters of the charging pile, and without a match, the charging is not permitted; performing processing and gathering of discrete data of all sites, thereby forming more intuitive data for more convenient use by the regional monitoring device. The analysis processing is performed for a primary purpose of preventing erroneous data from entering the system as far as possible, and for a secondary purpose of performing level-to-level gathering of discrete data of all sites, as the regional monitoring device expects to obtain the gathered data, instead of detailed data of each transaction.

The battery charge/swap station monitoring device is also responsible for supporting station-level operation management of battery charge/swap stations; for uploading service information data of battery charge/swap station monitoring, battery operation and maintenance management, metering and billing and service settlement, and the like, wherein the service information data may comprise whether charging piles are working in a normal state, whether batteries are normally charged, amount of charge, fees of charge, and customer payment conditions, etc.; and for allowing the regional monitoring device to query and control the service information data, which may specifically include battery charge/swap station monitoring, swap service and operation management, etc.

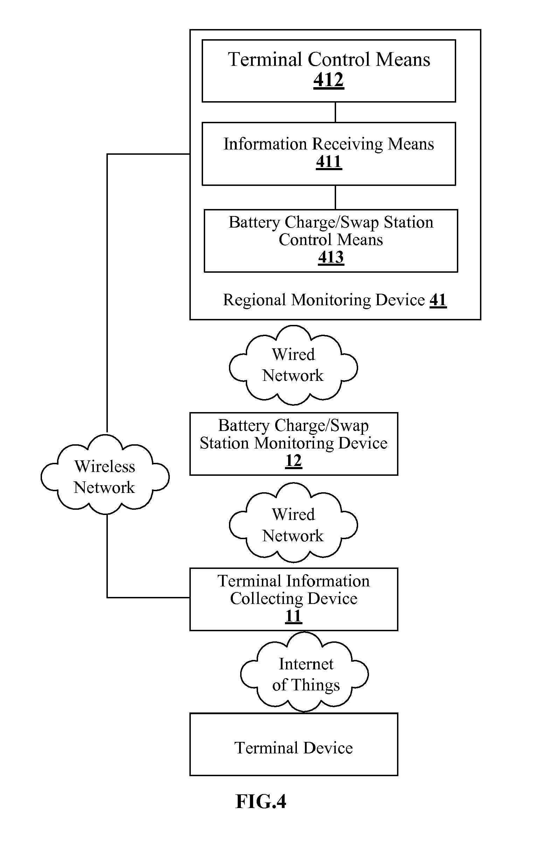

FIG. 4 is a structural view of a further embodiment of the battery charge/swap monitoring system of this disclosure.

As shown in FIG. 4, compared with the embodiment in FIG. 1, the regional monitoring device 41 in this embodiment may comprise:
information receiving means 411 for receiving the state information and the orientation information of the terminal device from the terminal information collecting device, and the state information (e.g., information of a voltage value, a current value, video of the battery charge/swap station being monitored, etc.), the metering and billing information of the battery charge/swap station, and the identity identification information of the terminal device from the battery charge/swap station monitoring device;
taking transmitting information wirelessly as an example, the information receiving means can be implemented by means of an antenna, a filter, and a baseband signal processing circuit, etc.;
terminal control means 412, connected to the information receiving means 411, for analyzing the state information, the orientation information, and the identity identification information of the terminal device, and issuing a control command to the terminal device according to an analysis result, thereby realizing control over the terminal device;
battery charge/swap station control means 413, connected to the information receiving means 411, for analyzing the state information of the battery charge/swap station, and issuing a control command to the battery charge/swap station monitoring device according to an analysis result, thereby realizing control over the battery charge/swap station.

For example, if the control command is issued in a wireless manner, the terminal control device and the battery charge/swap station monitoring device can be implemented by means of a signal encoding unit, a frequency mixer, an antenna, etc., and the control command may be for example a command to terminate charging of batteries.

The terminal control device and the battery charge/swap station control device can issue remotely the control command to various types of devices such as battery charge/swap stations, electric vehicles, batteries, vehicle terminals, etc., realize concentrated monitoring of the battery charge/swap stations, electric vehicles, batteries, etc. based on the operating state of the battery charge/swap station uploaded by the battery charge/swap station monitoring device and battery state information, orientation information, and the like uploaded by the terminal information collecting device, wherein the monitoring may specifically include monitored information collection, collected information management, information warning and control of terminal devices, etc.

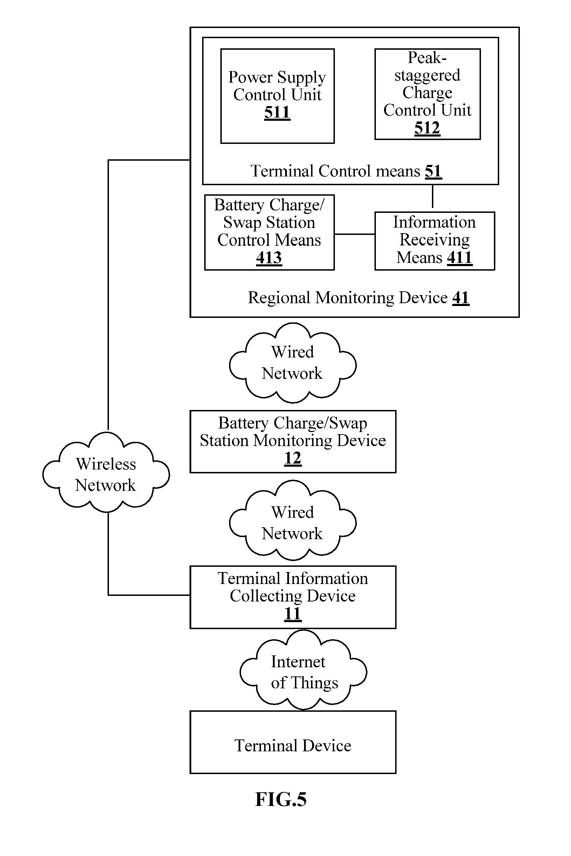

FIG. 5 is a structural view of a further embodiment of the battery charge/swap monitoring system of this disclosure.

As shown in FIG. 5, compared with the embodiment in FIG. 4, the terminal device in this embodiment may comprise an electric vehicle and a battery provided with a wireless receiving module, and state information of the terminal device may include state information of the battery and a traveling state of the vehicle; the terminal control means 51 may include:
a power supply control unit 511, connected to the information receiving means, for controlling power supply of the battery to the electric vehicle based on the state information of the battery, the traveling state of the vehicle and orientation information;
specifically, abnormality information and faults in the battery state information can be classified according to levels of dangers, into for example several levels from low to high; information of a vehicle in a traveling or still state and a real-time speed of the vehicle are collected using a sensor mounted on the vehicle, the specific geographic position information of the vehicle is collected using a GPS, and a level of risk of the vehicle after its loss of power is subjected to comprehensive analysis according to the speed and the geographic position of the vehicle; for battery abnormality of a low level and a high-risk case that the vehicle lost power, users are given a prompt to handle such cases at proper time by making a warning with the vehicle terminal; the users are offered auxiliary decision information for emergency treatment according to the geographic position of the vehicle and overall conditions of the vehicle collected by the sensor, in conjunction with distribution of a battery charge/swap service network and emergency repair abilities; for battery abnormality or faults of a high level, it can be handled by making a warning plus emergency power-off, and for example, the users are informed by the vehicle terminal that power supply to the system will be cut off in one or several minutes, so that the users can spare one or several minutes to take emergency escape from risks;
a peak-staggered charge control unit 512, connected to the information receiving means, for notifying battery charge/swap users based on load data of a current distribution network so as to direct the users to perform battery charge/swap during a non-peak time period according to load variation. For example, the peak-staggered charge control unit can share information with an information intranet by performing two-way interaction with the distribution network, acquire in real time load data of the current distribution network from the information intranet, notify the battery charge/swap users in time in a wired or wireless manner, and direct customers to make arrangement for battery charge/swap during a non-peak time period according to the load variation, thereby achieving the purpose of peak load cutting.

Based on differences between power grid load management manners, the charging demand of electric vehicles can be controlled by means of a direct or indirect method. The direct method is established on communication between each electric vehicle and the power grid, and makes arrangement for the charge of each electric vehicle with reference to real-time conditions of the power grid and information of on-line electric vehicle. This pattern is adapted to a structure with a third-party management platform, which signs an agreement with the power grid and users, respectively, in which rights and obligations of the three parties are specified. This pattern must be established on the basis of reliable communication, places emphasis on limitations and demands of the power grid, and reduces, to some extent, convenience and freedom of electric vehicle users. This pattern has a high control degree for electric vehicle and is adapted to management and operation of the future V2G (Vehicle to Grid).

The indirect method directs charging behaviors of the electric vehicle users by means of electricity price signals (peak-valley price, time-of-use price, or spot price). This pattern is established in an open electricity market environment, is adapted to direct contact of electricity companies or other charging facilities owners with users, lays more emphasis on the users' demands for convenience, and requires less communication.

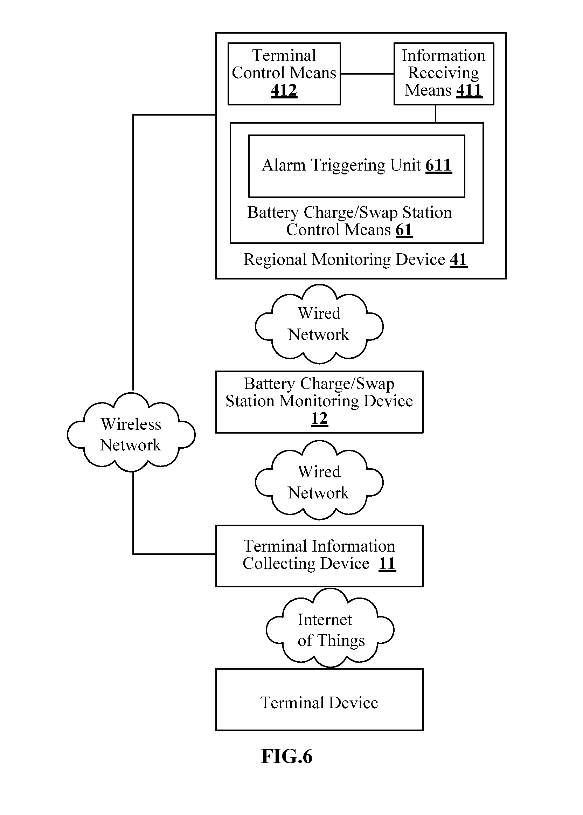

FIG. 6 is a structural view of a further embodiment of the battery charge/swap monitoring system of this disclosure.

As shown in FIG. 6, compared with the embodiment in FIG. 4, state information of a battery charge/swap station in this embodiment includes a voltage value and a current value, and the battery charge/swap control means 61 may include:
an alarm triggering unit 611, connected to the information receiving means, for triggering an abnormal operation alarm of a battery charge/swap station when the received state information of the battery charge/swap station is abnormal.

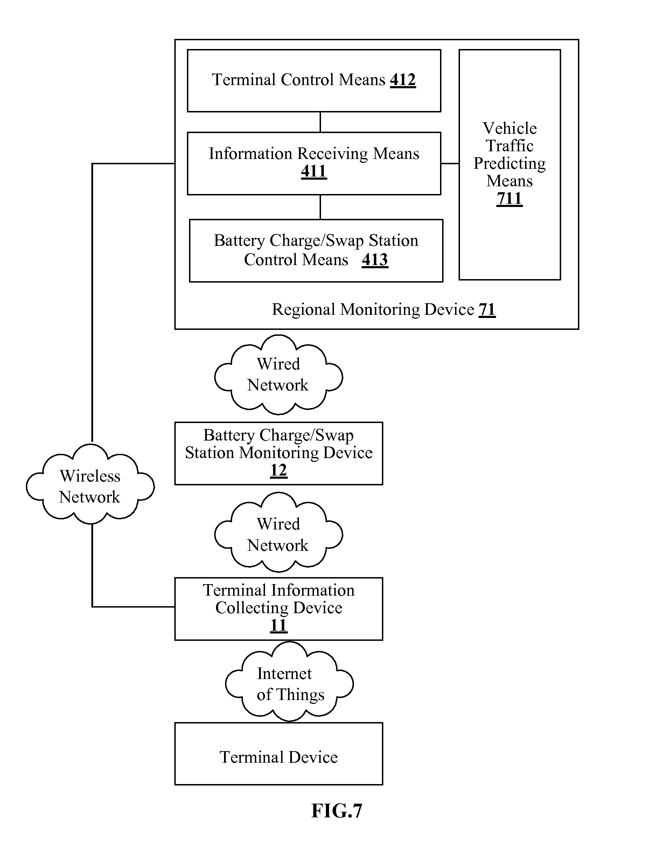

FIG. 7 is a structural view of a further embodiment of the battery charge/swap monitoring system of this disclosure.

As shown in FIG. 7, compared with the embodiment in FIG. 4, the regional monitoring device 71 in this embodiment may further comprise:
vehicle traffic predicting means 711, connected to the information receiving means, for predicting vehicle traffic based on road conditions and the orientation information of the terminal device.

The vehicle traffic predicting means is capable of making analysis based on road traffic information, orientation information of the terminal device, and data provided by a Geographic Information System (GIS), and predicting overload traffic of vehicles during a certain time period, thereby providing reference basis and value of use for market development, ordered charges and charging line optimization.

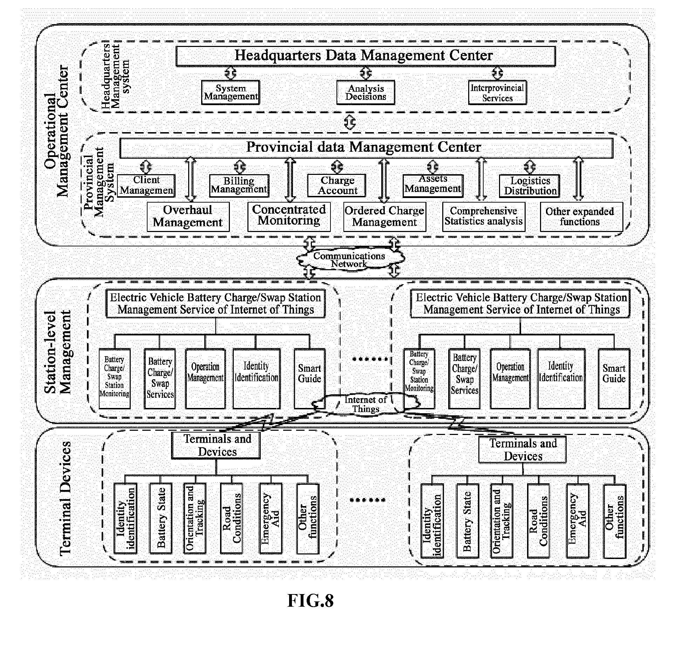

FIG. 8 is a function description view of the battery charge/swap monitoring system of this disclosure.

As shown in FIG. 8, a battery charge/swap station monitoring system can be designed in a manner described below.

The battery charge/swap station monitoring system can be divided into three layers from low to high: a terminal device layer, a station-level management layer, and a regional management layer (i.e., an operation management center), wherein the regional management layer can further be divided into two parts, a provincial management system and a headquarters management system, as required.

### (1) Terminal Device Layer

Devices and terminals for identifying, collecting, and processing fundamental data related to system operations, comprise power batteries, electric vehicles, and vehicle terminals, etc. The terminal device layer is capable of performing sensing and identification according to a uniform coding standard using an information sensing technology, and of collecting current operating states of the vehicles and batteries, such as information of quantity of electricity, current, voltage, temperature, geographic position, etc., and of performing data exchange with the station-level management layer by wired or wireless communication means.

### (2) Station-Level Management Layer

The station-level management layer, established based upon the terminal device layer, performs management directed to objects including charging piles, battery charge/swap stations, distribution stations, and the like, which includes monitoring of battery charge/swap facilities, battery operation and maintenance management, metering and billing and service settlement, data services for superior systems, thereby realizing rapid, reliable, and smart operation and management on electric vehicle battery charge/swap stations.

### (3) Regional Management Layer

Deployed over the station-level management layer, the regional management layer performs management on operations of related battery charge/swap services within a specific geographic region. The regional management layer should provide an information exchange interface with a related power grid operation management system. The regional management layer can further be divided into a provincial management system and a headquarters management system.

### (3a) Provincial Management System

The provincial management system is responsible for carrying out monitoring and management on operations of battery charge/swap services related to provincial companies of the power grid, for gathering together user business information, settlement information, operation information and customer service information in an area under its jurisdiction, for offering mass storage of such information and realizing inter-station data sharing, and on the basis of deep analysis, and for making decisions and scheduling of global services within the area, which include billing settlement, operation management, asset management, logistics allocation and customer services. The provincial management system is also responsible for submitting, with the headquarters management system, macro statistics information including operation conditions and assets conditions, etc.

### (3b) Headquarters Management System

The headquarters management system is the unique central-level monitoring management system within an area under jurisdiction of the State Grid. The headquarters management system in principle does not participate in specific operation decisions on battery charge/swap services in individual regions. The headquarters management system collects and gathers together the macro statistics information including operation conditions and assets conditions, etc. from respective provincial management systems, as a basis for laying out service development and establishment of the whole system. The headquarters management system is responsible for information transfer and coordination of inter-provincial services, and formulating handling principles in terms of billing settlement and assets relations of the inter-provincial services.

The technical framework of the battery charge/swap monitoring system based on the internet of things may comprise a terminal-device-layer technical framework, a station-level-management-layer technical framework, and a regional-management-layer technical framework,
wherein the terminal-device-layer technical framework carries out identity identification and information collection of objects under management using RFID, sensors, image recognition techniques, etc.;
the station-level-management-layer technical framework interconnects related main bodies with identity identifiers, such as electric vehicles, power batteries, charging facilities, users as vehicle owners, and a smart power grid, etc. using the communication technologies such as GPRS/3G, WIFI, Internet, etc., thereby realizing service handling and management of battery charge/swap stations;
the regional-management-layer technical framework realizes automatic operation and management of the battery charge/swap monitoring system based on the internet of things, on the basis of an information dedicated network or the Internet, using the computer information integration technology.

The main functions of the regional management layer comprise customer service management, metering and billing management, charge settlement management, assets management, logistics distribution, overhaul management, concentrated monitoring, comprehensive statistics and analysis, and system management. The main functions of the station-level management layer comprise monitoring of battery charge stations, and services of battery swap stations. The main functions of the terminal device layer comprise battery identity identification of batteries, battery orientation and tracking, battery state information collection, vehicle identity identification, and vehicle traveling dynamic orientation.

In detail, the headquarters management system in the regional management layer (i.e., the operation management center) is capable of realizing the following functions.

### (a1) Comprehensive Statistics and Analysis

By customizing and executing subjects, rows, columns and statistical schemes of report forms, comprehensive statistics, queries and outputs (in the formats supporting word, excel, pdf, etc.) are carried out in terms of customer archives modification information, customer consumption behaviors, battery faults rate, equipment stock conditions, logistics distribution execution results, equipment overhaul execution conditions, and customer satisfaction degree, etc., thereby fulfilling daily service statistics, operation activities analysis and market exploitation auxiliary decisions of administration units in various levels, which may specifically include report-form template maintenance, report-form statistics and report-form queries, etc.

### (a2) System Management

By means of a management pattern with level-to-level authorization, maintenance, role defining, and authority item configuration, etc. of organizational institutions and personnel in all levels are performed, and configuration management of system standard codes is carried out by means of system parameters; ex post facto tracking of system service processing is realized by means of log records; loose-coupling integration between modules of the system is realized by mans of messaging services, which may specifically include management of institutions in operation, role defining, authority item defining, system parameter configuration, messaging services, etc.

### (a3) Interregional Settlement

For trans-provincial-grid battery change, the headquarters make uniform coordination to provide property modification and assets transfer of battery devices between provincial grids.

The provincial management system at the regional management layer is capable of realizing the following functions.

### (b1) Customer Service Management

Through service channels such as business halls, calling centers, customer service websites, self-service terminals, and site and letter acceptance, etc., requests for such customer services as account-opening, account-changing, account-cancellation, contracts management, battery charge/swap, fees payment, business consultation, information query, faults overhaul, emergency aids, complaints, tip-offs, suggestions, praise, opinions and subscription are accepted. In order to guarantee the quality of service and improve customers' degree of satisfaction, it is necessary to track and urge to handle the processing of the service requests and to carry out supervision of the service quality. After completing the service processing, it is necessary to revisit the customers in order to know whether or not the customers are satisfied with the processing of the service requests, and form closed-loop management. Meanwhile, in order to improve the service efficiency, the customers can be provided with site services, such as battery replacement and battery faults reparation, etc. Specifically, account-opening management, account-changing management, contracts management, calling centers, customer service websites, self-service terminals, intelligent interactive terminals, field services and other interactive service channels and their relevant applications may be included.

### (b2) Metering and Billing

The metering and billing standards are formulated and released according to policy standards, and users (batteries, electric vehicle and so on) are charged with the fees produced in a battery charge/swap process in accordance with the metering and billing standards, with the calculation results verified and the abnormities in the process dealt with, in order to ensure the standardization, correctness, and integrity of the battery charge/swap billing. Specifically, billing policy standards management, customer billing model management, fees settlement, and auditing management may be included.

### (b3) Charging Accounts

The battery charge/swap fees of the customers and other relevant service costs are reclaimed in time by sit-and-collect, trusted collection, smart card payment, POS machine payment, mobile phone payment and other forms of payment patterns; the accounts management system is established in accordance with the "Accounting Standards for Business Enterprises", and equal debts and credits accounting principles in order to realize the management of users' prepayment, fund remittance, cost accounting and reconciliation management between all levels of units and reconciliation management between all levels of management units and banks. Specifically, customer payments management, service fees management and accounts management may be included.

### (b4) Assets Management

The process of the formation of purchasing plan, the technological support of bidding, the ordering contract and the technical agreements are managed by means of the internet of things and the management of equipment requirement plan, bidding selection, ordering and suppliers' information. Meanwhile, the standard management of the equipments (including power distribution equipment, charging equipment, swapping equipment, electric vehicle, battery, and monitoring equipment, metering and billing equipment, etc.) can realize the tracking management of the state of equipments' life cycle. In addition, the services of station-to-station battery borrowing and returning are provided in order to realize the emergent battery transfer. Specifically, procurement management, testing management, warehouse management, battery borrowing / returning, equipment ledger management, equipment rotation, overhaul management and scrap management, etc. may be included.

### (b5) Logistics Distribution and Delivery

The standard and orderly management of the warehouse is realized through establishment and maintenance of a multi-level warehouse, reservoir area, storage place, and the supporting businesses of warehousing and outbounding management, warehouse inventory and inventory warning. The logistics control from the warehouse distribution center to subordinate units could be realized through the management of the coming into being of the demands of equipment distribution, the working out of the distribution plan and the carrying out of the distribution; The technology of the Internet of things, the automatic identification of various equipments (battery charge/swap stations, batteries) in the process of logistics scheduling, the location tracking of the logistics vehicle and real-time on-line application, approval and distribution of equipments scheduling request could meet the diverse management requirements of the logistics scheduling and construct the intelligent scheduling system. Specifically, vehicle management, delivery application, distribution plan, implementation of distribution, distribution allocation and the management of distribution quality may be included.

### (b6) Logistics Monitoring

The regional monitoring device performs real-time acquisition of the location of vehicles in the process of the battery distribution according to the GPS terminal provided for each logistics vehicle, and conveniently locates and tracks the logistics vehicle, the delivery route and the battery state of the electric vehicle with the help of the direct displaying of a GIS system.

### (b7) Overhaul Management

The customers' fault repair or the application of emergency rescue is handled through the customer contacts (artificial report to repair, telephone calls, recording, fax, on-line reservation) and the working assignments are delivered to the relevant department of every business area according to the repair site, type of business, in order to quickly and efficiently deal with the customers' repair requests and finish the site repair, simultaneously tracking, supervising on the process. The revisiting of the customers after the failure treatment guarantees the coming into being of the closed loop management.

Regular on-site inspection, inspection and periodic verification are performed on the distribution facilities, charging equipment, swapping equipment, monitoring equipment, batteries, and electric vehicles and so on. And safe and sound operation is based on the handling of working assignments by relevant department in each business area after the ascertaining of the running state of the equipment and the judging of potential faults and risks based on the test results. The working assignments include the error handling, overhaul, replacement, demolition and other tasks. To be specific, this includes dispatch management, periodic inspection, temporary inspection, overhaul management and site visits.

### (b8) Centralized Monitoring

The centralized monitoring of battery charge and swap stations, vehicles and batteries, etc. is realized by sending the distance instructions to charging and swapping station, vehicles and battery and diverse equipments and also the active uploading of the above-mentioned equipments to receive the real-time status of the battery charge and swap stations, video sent from station-level units and the information about the battery status sent from the user terminal layer. Specifically, the centralized monitoring may include monitoring and management of information acquisition, warning and control of station-level management units and user terminal layers.

### (b9) Comprehensive Statistics and Analysis

By customizing and executing subjects, rows, columns and statistical schemes of report forms, comprehensive statistics, queries and outputs (in the formats supporting word, excel, pdf, etc.) are carried out in terms of customer archives modification information, customer consumption behaviors, battery faults rate, equipment stock conditions, logistics distribution execution results, equipment overhaul execution conditions, and customer satisfaction degree, etc., thereby fulfilling daily service statistics, operation activities analysis and market exploitation auxiliary decisions of administration units in various levels, which may specifically include report-form template maintenance, report-form statistics and report-form queries, etc.

### (b10) System Management

By means of a management pattern with level-to-level authorization, maintenance, role defining, and authority item configuration, etc. of organizational institutions and personnel in all levels are performed; workflow edition defining and release of services including account-opening and changing, etc. are realized by graphical flow modeling; and configuration management of system standard codes and service rules is carried out by means of system parameters; ex post facto tracking of system service processing is realized by means of log records; timely prompt and urging-to-handle of service processing and loose-coupling integration between modules of the system are realized by mans of messaging services. Specifically, management of institutions in operation, role defining, authority item defining, system parameter configuration, messaging services, etc. may be comprised.

### (b11) Charging Load Forecasting

The accurate, efficient data support for the battery storage and the construction management is provided based on results of analysis of the market changing trend, its characteristics and the abnormities by means of various analysis model or methods according to information of the social and economic development, charging market and that of charging and swapping station. The market development laws are found out, various predictive models are used, and the market forecasting indicators are rolled on the basis of a market analysis to produce forecast results in order to provide the references for the formulation of annual production and operation plan, the marketing measures, the energy management, and the orderly charging.

### (b12) Vehicles Monitoring

Real-time tracking and display of a traveling process of the vehicle is performed, vehicle traveling information sent from the vehicle terminal is processed, and modern management of the vehicle is achieved with reference to RS (Remote Sensing), GPS and GIS, which comprises traveling security monitoring management, operation management, quality-of-service management, and smart centralized scheduling management, etc.; playback of vehicle traveling trajectory is realized, and some value-added services such as an optimum route service, a nearest battery charge/swap station smart prompt, etc. are provided in conjunction with weather and road conditions.

The station-level management layer is capable of realizing the following functions.

### (c1) Battery Charge/Swap Station Monitoring

The battery charge/swap station monitoring device may comprise a monitoring system which may further comprise a battery charge/swap monitoring system, a power supply monitoring system and a security monitoring system, etc., and has a remote interface. The battery charge/swap monitoring system can realize monitoring and control over non-vehicle-mounted charger operation and a charging process, and storage and management of data; the power supply monitoring system can realize monitoring and control over power supply conditions, quality of electric energy, device operating states, etc.; the security monitoring system can realize environmental control, device security monitoring, fireproof monitoring and antitheft monitoring, etc. of charge stations.

### (c2) Assets Life Cycle Monitoring

By assigning a unique RFID tag to each terminal device, tracking management of flows and links in the process of use of enterprise assets is realized, and the accuracy of assets inventory is improved, thereby really satisfying the demand of the State Grid for carrying out comprehensive, precise, timely, and dynamic assets full-life cycle management of managed objects.

### (c3) Business Monitoring

Real-time statistics and summary of battery charge/swap conditions are carried out, summary data is reported to the higher authority, and service development conditions of individual regions are subjected to supervision, and the latest electric power information is imparted to users at the same time.

### (c4) Services of Swapping Stations

The services of swapping stations have the following main functions: entry of batteries required being charged to stations/spots, secure and economical charge and management of the batteries, exit of the full-charged batteries as required, and installing the fully-charged batteries onto electric vehicle.

### (c5) Operation Management

The operation management comprises functions such as device inspection, overhaul, loss-reporting/scrap, in-station deficiency record, etc.

The device inspection may be classified into regular inspection, faults inspection, special inspection, and supervising inspection, etc. The device inspection can realize addition, modification, deletion, and query, etc. of device inspection records of different types according to authorities. It can realize download and upload of device inspection record templates between PC and PDA.

The device overhaul may comprise overhaul plans and device overhaul.

The loss-reporting/scrap can realize operations including filling-in, application, approval, etc. of assets loss-reporting/scrap forms according to different authorities by means of a flow engine, can inquire about the loss-reporting/scrap forms according to different conditions, and automatically modify an assets ledger status of an operating management layer after termination of the flow.

The in-station deficiency record can realize operations including filling-in, processing, defect-elimination, etc. of deficiency records according to different authorities by means of the flow engine, and can inquire about the deficiency records based on different conditions.

The terminal device layer is capable of realizing the following functions.

### (d1) Battery Identity Identification

The unique identification of an identity of a battery is realized by installing an RFID tag or other identification devices on the battery. Warehouse management, logistics distribution and battery charge and swap services are completed by scanning and identification with an RFID card reader.

### (d2) Battery Orientation and Tracking

The orientation of the battery is carried out through an orientation information module on the battery or other positioning technologies, and location information is transmitted to the regional monitoring device in real time, thereby realizing the real-time tracking of the battery.

### (d3) Battery State Information Acquisition

During the vehicles' traveling, the battery management system can reliably complete the tasks of real-time monitoring and fault diagnosis of the battery state, and at the same time use more rational control strategy to inform the vehicle terminal by means of the bus to achieve the goal of efficiently and effectively using the battery. Its main functions include real-time monitoring of the battery state, data processing, fault analysis and positioning, electric charge state estimation, data transmission, thermal management, charge and discharge control, operation data storage, data transfer and database management and so on. The vehicle terminal communicates with the battery management system through CAN bus to obtain operation parameters of the battery, including battery rated capacity, actual capacity, discharge cycle lifetime, rated voltage and estimation of the remaining amount of electricity, etc.

### (d4) Vehicle Identity Identification

By embedding an RFID tag or chip within an intelligent vehicle terminal of an electric vehicle, the identity of the vehicle can be automatically identified when the vehicle travels to a place with an identifier. When the vehicle enters a charge/swap station, the identifier in the station can automatically identify an identity of the vehicle owner and battery use information, and intelligently lead the vehicle to receive the relevant services. When the vehicle enters highway junctions, the identifier there can automatically read the vehicle information, and complete the automatic payment function and so on.

### (d5) Vehicle Traveling Dynamic Orientation

By means of GPS or other positioning technologies, position information of the vehicle is obtained, and the traveling position and operating conditions, such as longitude, latitude, speed, state, time, and the date, etc. of the vehicle are displayed on an electronic map, with different colors indicating different states, thereby forming a visual trajectory.

### (d6) Road Condition Prompt

The regional monitoring device obtains traffic congestion related to the current road conditions based on an analysis of position distribution of all vehicles and transmits data to the vehicle terminal to provide a road condition prompt for the users.

### (d7) Nearby Battery Charge and Swap Station Prompt

After a request is made by a vehicle terminal, a battery charge/swap station nearest to the current location of the vehicle is found after making comprehensive analysis by the regional monitoring device, and the position of the battery charge/swap station is transmitted to the vehicle terminal.

### (d8) Optimum Route Prompt

Upon a request made by the vehicle terminal, information of a destination to be reached by the vehicle is uploaded to the regional monitoring device, and the regional monitoring device makes analysis to obtain an optimum route to reach the destination based on weather conditions, and road conditions, and sends the route to the vehicle terminal in a real-time interactive manner.

### (d9) Dynamic Charging Plan Prompt

Based on the current state of the vehicle battery and the battery use status, in conjunction with the peak-valley price, a dynamic charging plan is provided to the users for reference via the vehicle terminal.

### (d10) Vehicle Trajectory Playback

The system automatically records the specific location, time and other information of the vehicle, which are played back on a terminal electronic map, for facilitating conditions analysis. After completing one travel, the traveling route of the vehicle is stored, and if necessary, the traveling trajectory of the vehicle and the current geographic information are displayed again at different graphic layers of the electronic map, by time setting, time and road sections for playback can be adjusted.

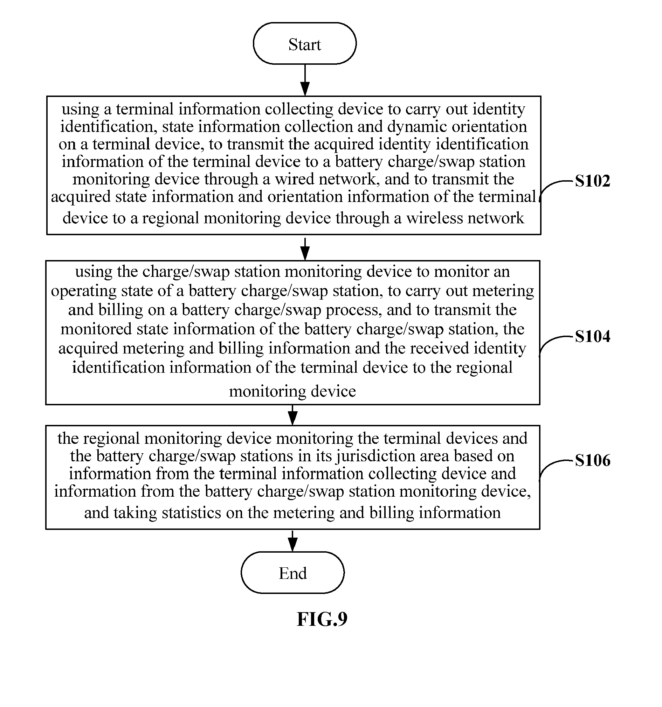

FIG. 9 is a flow chart of an embodiment of a battery charge/swap monitoring method based on the internet of things of this disclosure.

As shown in FIG. 9, this embodiment may comprise the following steps:
S102, using a terminal information collecting device to carry out identity identification, state information collection and dynamic orientation on a terminal device, to transmit the acquired identity identification information of the terminal device to a battery charge/swap station monitoring device through a wired network, and to transmit the acquired state information and orientation information of the terminal device to a regional monitoring device through a wireless network;
for example, an RFID card reader can be used to read an RFID tag attached to the terminal device to carry out identity identification of the terminal device, and to transmit the identity identification information of the terminal device to the battery charge/swap station monitoring device via a fiber-optic network; a battery management system can be used to collect the state information of the battery from the battery, and to transmit the state information of the battery to the wireless transmission means; and GPS orientation means can be used to carry out dynamic orientation of the terminal device, and to transmit the orientation information of the terminal device to the wireless transmission means;
S104, using the charge/swap station monitoring device to monitor an operating state of a battery charge/swap station, to carry out metering and billing on a battery charge/swap process, and to transmit the monitored state information of the battery charge/swap station, the acquired metering and billing information and the received identity identification information of the terminal device to the regional monitoring device;
S106, using the regional monitoring device to monitor the terminal devices and the battery charge/swap stations in its jurisdiction area based on information from the terminal information collecting device and information from the battery charge/swap station monitoring device, and to take statistics on the metering and billing information.

Specifically, (1) it is possible to analyze the state information, the orientation information, and the identity identification information of the terminal device, and to issue a control command to the terminal device according to an analysis result, thereby realizing control over the terminal device. For example, power supply of the battery to the electric vehicle is controlled based on the state information of the battery, the traveling state of the vehicle and orientation information; battery charge/swap users are notified based on load data of a current distribution network so as to direct the users to perform battery charge/swap during a non-peak time period according to load variation; orientation and tracking of the terminal device are carried out based on the orientation information.

The existing charging manner for electric vehicle is access and charge, that is, the electric vehicle is immediately charged after its access to the power grid, and function as a conventional power-consuming device, without any charge control. Clearly, this manner will further increase the burden of the power grid at a load peak, and increase the difficulties in peak-adjustment of the power grid, and the electric vehicle battery charge/swap stations cannot completely play the role of peak load cutting.

By performing two-way interaction with the distribution network, load data of the current distribution network is acquired in real time from the information intranet, the battery charge/swap users are notified in time in a wired or wireless manner, and customers are directed to make arrangement for battery charge/swap during a non-peak time period according to the load variation, thereby achieving the purpose of peak load cutting. Meanwhile, various fees generated in the battery charge/swap process for users (batteries, and electric vehicle, etc.) can be calculated according to metering and billing standards, the computation results are examined and checked, and the corresponding processing is performed when abnormality is found in the examining and checking process, thereby ensuring standardization, correctness, and completeness of battery charge/swap billing.
(2) It is possible to analyze the state information of the battery charge/swap station, and to issue a control command to the battery charge/swap station monitoring device according to an analysis result, thereby realizing control over the battery charge/swap station. For example, the state information of the battery charge/swap station includes a voltage value and a current value, and an abnormal operation alarm of a battery charge/swap station is triggered when the received state information of the battery charge/swap station is abnormal.

Optionally, the step of monitoring the terminal devices and the battery charge/swap stations in its jurisdiction area may further include the steps of: carrying out orientation and tracking of the terminal device based on the orientation information of the terminal device; and predicting vehicle traffic based on road conditions and the orientation information of the terminal device.

Optionally, the regional monitoring device may further perform billing according to billing standards and quantity of electricity charged in a battery charge/swap process.

Optionally, the regional monitoring device may further issue remotely a query command to the terminal information collecting device and/or battery charge/swap monitoring device, and acquire information to be queried about from the received information.

Wherein, the terminal device may comprise a battery, a vehicle terminal and an electric vehicle. The terminal information collecting device may comprise information sensing means for carrying out identity identification, state information collection and dynamic orientation on the terminal device; wireless transmission means, connected to the information sensing means, for transmitting the acquired state information and orientation information of the terminal device to the regional monitoring device via a wireless network; wherein the information sensing means includes an RFID card reader, GPS orientation means, and a battery management system.

This embodiment realizes a smart and interactive battery charge/swap monitoring system using the technology of the internet of things. By installing sensors and identification system on the electric vehicle, batteries and the vehicle terminal, etc., this embodiment can sense in real time a traveling state of the electric vehicle and a state-of-use of the batteries by using the technologies related to the internet of things, and acquire energy supply states of battery charge/swap stations and the current network from the working state of the battery charge/swap stations being monitored, and realize comprehensive monitoring and analysis of the electric vehicle and the battery charge/swap stations, realize assets management intensification, storage management simplification, smart logistics allocation, and charge billing varieties, operation service interaction, thereby ensuring the electric vehicle, batteries and battery charge/swap stations, etc. to operate stably, economically, and efficiently. Meanwhile, the effect of reducing power consumption and exhaust emission of the electric vehicle can be fully achieved from the angle of power grid operation, thereby realizing resource optimized configuration, fulfilling maximization of social economical benefits, and promoting the sustainable development of economy.

In another embodiment of the method in this disclosure, the battery charge/swap monitoring can be carried out through the following steps:
Step 1, a terminal information collecting device performs information collection and acquisition of user information (e.g., user IDs, user names, ways for contact, certificate numbers, etc.) and device parameter information (e.g., temperature, voltage and current of batteries, type number of electric vehicle, etc.) anywhere and anytime by sensing means such as RFID, GPS, sensors, etc., capturing means, and measuring means. Specifically, after an RFID tag enters a magnetic field, an RFID card reader emits a radio frequency signal, and the RFID tag (which may be an inactive tag or a passive tag) transmits product information stored in a chip depending on energy obtained by induced current, or the RFID tag (which may be an active tag or a positive tag) voluntarily transmits a signal at a certain frequency; the RFID card reader reads information, decodes it, and then performs related data processing on the decoded information by means of the battery charge/swap station monitoring device;
Step 2, the battery charge/swap station monitoring device makes terminal devices and battery charge/swap stations have access to an information network via a telecommunications network and the Internet, whereby reliable information interaction and sharing can be carried out anywhere and anytime;
Step 3, the regional monitoring device performs analysis and processing of mass interregional, intertrade, and interdepartmental data and information using various intelligent computing technologies such as Cloud computing, ambiguity recognition, etc., thereby making smart decisions and control on the terminal devices and the battery charge/swap stations.

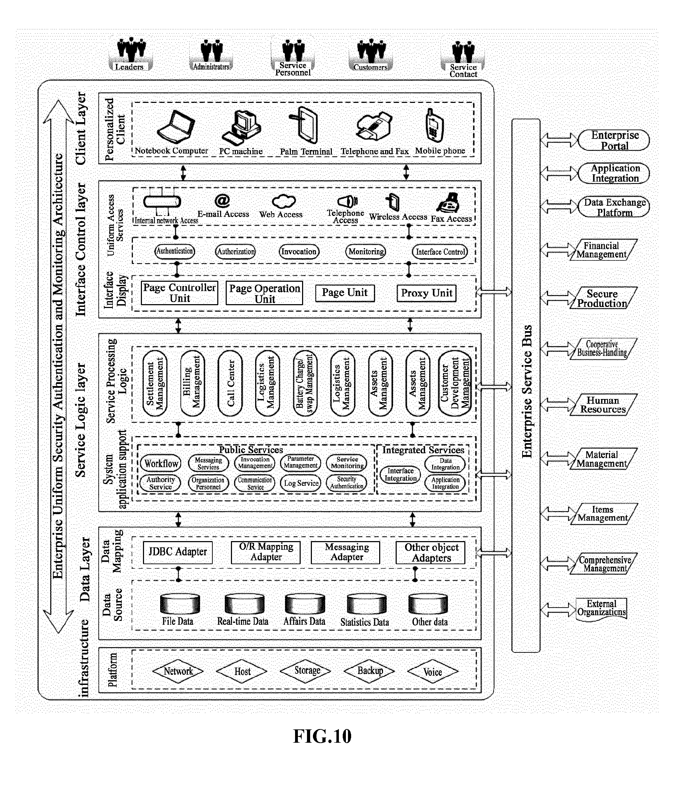

FIG. 10 is a view showing technical implementation principles of the battery charge/swap monitoring method based on the internet of things of this disclosure.

As shown in FIG. 10, a multilayer architecture component technology can be used to separate interface control, service logic and data mapping, and it can be generally divided to a client layer, an interface control layer, a service logic layer, a data layer (including a data mapping layer and a data source) and a basic architecture platform, and in virtue of load-bearing relations of services between system components at all layers, system functions are realized.

### 1. Client layer

Client terminals for accessing an application system and processing human-machine interaction comprise a browser, desktop application programs, and wireless applications, etc.

### 2. Interface Control layer

It can be further sub-divided into an access service layer and an interface display layer.
(1) Access service layer: it supports varied access patterns including enterprise internal networks, E-mails, foreign websites, telephones, short messages and faxes, etc., provides uniform services such as authentication and authorization, service invocation, access control, etc., and realize association and control of interactive interfaces at the same time.
(2) Interface display layer: a MVC (Model-View-Controller) application framework can be used under the JEE (Java Platform Enterprise Edition) architecture, and consists of a page controller component, a page operation component, a JSP (Java Server Pages) page component and a service proxy unit, wherein display of an interface is performed by the JSP page component, specific operations on pages are completed by the page operation component by invoking specific services of the service logic layer by the service proxy unit, and the page controller component is responsible for uniformly invoking different page operation components and JSP page components. For some special services to be displayed and processed with larger amount of data, special applications (e.g., Applet) can be established for processing.

### 3. Service logic layer

It is used for deploying the service logic component, and can be sub-divided into a service processing logic component and a system application support component.
(1) Service processing logic: it is used for specific service logic implementation, and generally comprises service processing logic such as customer development management, assets management, logistics management, battery charge/swap management, calling centers, billing management, settlement management, and customer data archives management.
(2) System application support: it provides uniform and shared public services and platform supports for all components, and comprise workflow management, organization personnel, authority services, parameter management, service monitoring, security authentication, messaging services and log services, etc., and improves system's flexibility and expandability.

### 4. Data layer

The data layer consists of a data mapping layer and a data source, wherein the data mapping layer completes encapsulation of access to the data source, and makes design and implementation of the service logic layer more concentrated upon functions of the system itself. Meanwhile, the existence of the data mapping layer shields off dependence of the service logic layer on bottom data storage forms, so that the application system is adapted to databases of multiple types. The data source mainly comprises a database, memory data, message queues, magnetic-disk files, etc.

### 5. Infrastructure

The infrastructure mainly comprises platforms such as networks, hosts, storage, backup, voice access, etc.

The battery charge/swap system of the multilayer architecture performs separation of interface control, service logic and data mapping by means of component technologies, and realizes loose-coupling within the system, thereby responding to the demand of service variation for the system in a flexible and rapid way.

This disclosure places a number of battery charge/swap stations and charging facilities into a complete service network system in a concentrated manner, transforms battery assets relations, and carries out global coordination, invocation and management of power services for electric vehicle by using advanced sensing and communication technologies, thereby guaranteeing flexible and rapid services for users.

This disclosure will fill in a gap in the aspect of smart operation management of electric vehicle in China, satisfy practical demands for popularization of electric vehicle, further accelerate the industrial development process of electric vehicle in China, improve the proportion of electric energy in terminal energy consumption, promote a development procedure of replacing petrochemical energies with electric energy in the communications field, and impel further exploitation of electric power public energy services towards the communications field.

Although some specific embodiments in this disclosure are illustrated in detail with examples, those skilled in the art should understand that the above examples are only for the purpose of explanations, but not for limiting the scope of the invention. Those skilled in the art should understand that, without departing from the scope and spirits of the invention, modifications can be made on the above embodiments. The scope of the invention is defined by the claims appended.

## Claims

1. A battery charge/swap monitoring system based on the internet of things, comprising a terminal information collecting device, a battery charge/swap station monitoring device and a regional monitoring device, wherein
the terminal information collecting device is configured for carrying out identity identification, state information collection and dynamic orientation on a terminal device by using an information sensing mode, transmitting the acquired identity identification information of the terminal device to the battery charge/swap station monitoring device through a wired network, and transmitting the acquired state information and orientation information of the terminal device to the regional monitoring device through a wireless network;
the battery charge/swap station monitoring device is configured for receiving the identity identification information of the terminal device from the terminal information collecting device, monitoring the operating state of a battery charge/swap station, carrying out metering and billing on a battery charge/swap process, and transmitting the monitored state information of the battery charge/swap station, the acquired metering and billing information and the received identity identification information of the terminal device to the regional monitoring device;
the regional monitoring device is configured for monitoring the terminal devices and the battery charge/swap stations in its jurisdiction area based on information from the terminal information collecting device and information from the battery charge/swap station monitoring device, and taking statistics on the metering and billing information.

2. The system according to claim 1, wherein the terminal device includes a battery, a vehicle terminal, and an electric vehicle.

3. The system according to claim 2, wherein the terminal information collecting device includes:
information sensing means for carrying out identity identification, state information collection and dynamic orientation on the terminal device;
wireless transmission means, connected to the information sensing means, for transmitting the acquired state information and orientation information of the terminal device to the regional monitoring device via the wireless network.

4. The system according to claim 3, wherein the information sensing means includes:
an RFID card reader for reading an RFID tag attached to the terminal device to carry out identity identification of the terminal device, and for transmitting the identity identification information of the terminal device to the battery charge/swap station monitoring device via a fiber-optic network;
a battery management system for collecting the state information of the battery from the battery, and transmitting the state information of the battery to the wireless transmission means;
GPS orientation means for carrying out dynamic orientation of the terminal device, and transmitting the orientation information of the terminal device to the wireless transmission means.

5. The system according to claim 1, wherein the battery charge/swap station monitoring device includes a temperature detector, a humidity detector, a video collector, an analog-amount collector, and an electricity-consumption-amount collector, wherein the temperature detector, the humidity detector, and the video collector are provided within the battery charge/swap station, and the analog-amount collector and the electricity-consumption-amount collector are connected to a charging pile within the battery charge/swap station.

6. The system according to claim 1, wherein the regional monitoring device includes:
information receiving means for receiving the state information and the orientation information of the terminal device from the terminal information collecting device, and the state information, the metering and billing information of the battery charge/swap station, and the identity identification information of the terminal device from the battery charge/swap station monitoring device;
terminal control means, connected to the information receiving means, for analyzing the state information, the orientation information, and the identity identification information of the terminal device, and for issuing a control command to the terminal device according to an analysis result, thereby realizing control over the terminal device;
battery charge/swap station control means, connected to the information receiving means, for analyzing the state information of the battery charge/swap station, and for issuing a control command to the battery charge/swap station monitoring device according to an analysis result, thereby realizing control over the battery charge/swap station.

7. The system according to claim 6, wherein the terminal device includes an electric vehicle and a battery provided with a wireless receiving module, the state information of the terminal device including state information of the battery and a traveling state of the vehicle; wherein the terminal control means includes:
a power supply control unit, connected to the information receiving means, for controlling power supply of the battery to the electric vehicle based on the state information of the battery, the traveling state of the vehicle and the orientation information;
a peak-staggered charge control unit, connected to the information receiving means, for notifying battery charge/swap users based on load data of a current distribution network so as to direct the users to perform battery charge/swap during a non-peak time period according to load variation.

8. The system according to claim 6, wherein the state information of the battery charge/swap station includes a voltage value and a current value, and the battery charge/swap station control means includes:
an alarm triggering unit, connected to the information receiving means, for triggering an abnormal operation alarm of a battery charge/swap station when the received state information of the battery charge/swap station is abnormal.

9. The system according to claim 6, wherein the regional monitoring device further includes:
vehicle traffic predicting means, connected to the information receiving means, for predicting vehicle traffic based on road conditions and the orientation information of the terminal device.

10. A battery charge/swap monitoring method based on the internet of things, comprising the steps of:
using a terminal information collecting device to carry out identity identification, state information collection and dynamic orientation on a terminal device, to transmit the acquired identity identification information of the terminal device to a battery charge/swap station monitoring device through a wired network, and to transmit the acquired state information and orientation information of the terminal device to a regional monitoring device through a wireless network;
using the charge/swap station monitoring device to monitor an operating state of a battery charge/swap station, to carry out metering and billing on a battery charge/swap process, and to transmit the monitored state information of the battery charge/swap station, the acquired metering and billing information and the received identity identification information of the terminal device to the regional monitoring device;
the regional monitoring device monitoring the terminal devices and the battery charge/swap stations in its jurisdiction area based on information from the terminal information collecting device and information from the battery charge/swap station monitoring device, and taking statistics on the metering and billing information.

11. The method according to claim 10, wherein the terminal device includes a battery, a vehicle terminal, and an electric vehicle.

12. The method according to claim 11, wherein the terminal information collecting device includes:
information sensing means for carrying out identity identification, state information collection and dynamic orientation on the terminal device;
wireless transmission means, connected to the information sensing means, for transmitting the acquired state information and orientation information of the terminal device to the regional monitoring device via the wireless network,
wherein the information sensing means includes an RFID card reader, GPS orientation means, and a battery management system.

13. The method according to claim 12, wherein the step of using a terminal information collecting device to carry out identity identification, state information collection and dynamic orientation on a terminal device includes the steps of:
using the RFID card reader to read an RFID tag attached to the terminal device to carry out identity identification of the terminal device, and to transmit the identity identification information of the terminal device to the battery charge/swap station monitoring device via a fiber-optic network;
using the battery management system to collect the state information of the battery from the battery, and to transmit the state information of the battery to the regional monitoring device; and
using the GPS orientation means to carry out dynamic orientation of the terminal device, and to transmit the orientation information of the terminal device to the regional monitoring device.

14. The method according to claim 10, wherein the step of the regional monitoring device monitoring the terminal devices and the battery charge/swap stations in its jurisdiction area based on information from the terminal information collecting device and information from the battery charge/swap station monitoring device includes the steps of:
analyzing the state information, the orientation information, and the identity identification information of the terminal device, and issuing a control command to the terminal device according to an analysis result, thereby realizing control over the terminal device;
analyzing the state information of the battery charge/swap station, and issuing a control command to the battery charge/swap station monitoring device according to an analysis result, thereby realizing control over the battery charge/swap station.

15. The method according to claim 14, wherein the terminal device includes an electric vehicle and a battery provided with a wireless receiving module, the state information of the terminal device including the state information of the battery and a traveling state of the vehicle;
wherein the step of issuing a control command to the terminal device according to an analysis result, thereby realizing control over the terminal device includes the steps of:
controlling power supply of the battery to the electric vehicle based on the state information of the battery, the traveling state of the vehicle and the orientation information; and
notifying battery charge/swap users based on load data of a current distribution network so as to direct the users to perform battery charge/swap during a non-peak time period according to load variation.

16. The method according to claim 14, wherein the state information of the battery charge/swap station includes a voltage value and a current value, and the step of issuing a control command to the battery charge/swap station monitoring device according to an analysis result, thereby realizing control over the battery charge/swap station includes the step of:
triggering an abnormal operation alarm of the battery charge/swap station when the received state information of the battery charge/swap station is abnormal.

17. The method according to claim 10, wherein the step of the regional monitoring device monitoring the terminal devices and the battery charge/swap stations in its jurisdiction area based on information from the terminal information collecting device and information from the battery charge/swap station monitoring device further includes the steps of:
carrying out orientation and tracking of the terminal device based on the orientation information of the terminal device; and
predicting vehicle traffic based on road conditions and the orientation information of the terminal device.
